# EUROPÄISCHE PATENTSCHRIFT

(11) **EP 1 715 155 B1**
(45) Veröffentlichungstag und Bekanntmachung des Hinweises auf die Patenterteilung: **10.02.2010**
(21) Anmeldenummer: 06111911.1
(22) Anmeldetag: 29.03.2006
(51) Int. Cl.: F01N 13/18, F01N 13/16

(54) **Abgasanlage und zugehörige Abgasbehandlungsvorrichtung**
Exhaust system and corresponding exhaust gas treating apparatus
Système d'échappement et dispositif de traitement de gaz d'échappement correspondant

(30) Priorität: 18.04.2005 DE 102005017946
(43) Veröffentlichungstag der Anmeldung: 25.10.2006
(73) Patentinhaber: J. Eberspächer GmbH & Co. KG, 73730 Esslingen (DE)
(72) Erfinder: HARTMANN, Sylvia, 66299 Friedrichsthal (DE)
(74) Vertreter: Bongen, Renaud & Partner

(56) Entgegenhaltungen:
- EP-A1- 0 505 720
- DE-A1- 4 445 557
- DE-B- 1 190 770
- US-A- 4 703 885

## Beschreibung

Die vorliegende Erfindung betrifft allgemein eine Abgasanlage einer Brennkraftmaschine, insbesondere in einem Kraftfahrzeug, sowie eine Abgasbehandlungsvorrichtung für eine solche Abgasanlage.

Zur Herstellung von thermisch hochbelasteten Komponenten der Abgasanlage werden üblicherweise austenitische Stähle verwendet. Desweiteren hat sich bei Abgasbehandlungsvorrichtungen, bei denen in einem Gehäuse zumindest ein Abgasbehandlungseinsatz, insbesondere ein Katalysatorelement, angeordnet ist, gezeigt, dass es für die Lagerung des Abgasbehandlungseinsatzes vorteilhaft ist, das Gehäuse aus einem ferritischen Stahl herzustellen. Dementsprechend kommt es innerhalb einer Abgasanlage, die aus ferritischen Komponenten und aus austenitischen Komponenten zusammengebaut ist, zwangsläufig zu Ferrit-Austenit-Mischverbindungen.

Bei modernen Brennkraftmaschinen, wie sie insbesondere in Kraftfahrzeugen eingesetzt werden, sind zunehmende Abgastemperaturen zu beobachten, was im Bereich der genannten Ferrit-Austenit-Mischverbindungen zu Ausfällen aufgrund Thermoermüdung führen kann. Um diese thermisch bedingten Ermüdungserscheinungen zu vermeiden, ist es grundsätzlich möglich, den gefährdeten Bereich der Abgasanlage rein ferritisch oder rein austenitisch auszugestalten. Eine rein austenitische oder rein ferritische Ausgestaltung der thermisch belasteten Bereiche der Abgasanlage ist jedoch nicht immer möglich, wie aus DE 4 445 557 A1 bekannt da beispielsweise ferritische Materialen für manche Anwendungsfälle keine ausreichende Temperaturbeständigkeit aufweisen. Gleichzeitig können austenitische Materialen für die Lagerung eines Abgasbehandlungseinsatzes, wie z.B. eines Katalysators, unter bestimmten Voraussetzungen ungeeignet sein.

Die vorliegende Erfindung beschäftigt sich mit dem Problem, für eine Abgasanlage bzw. für eine Abgasbehandlungsvorrichtung der eingangs genannten Art eine verbesserte Ausführungsform anzugeben, bei der insbesondere die Gefahr thermisch bedingter Ermüdungserscheinungen reduziert ist, obwohl sowohl austenitische als auch ferritischen Materialien verbaut werden.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, innerhalb der Abgasanlage bzw. innerhalb der Abgasbehandlungsvorrichtung ein austenitisches Bauteil und ein ferritisches Bauteil mittels einer Verbindung aneinander zu befestigen, wobei diese Verbindung aus einem Material besteht, dessen thermischer Ausdehnungskoeffizient einen Wert aufweist, der zwischen den Werten der thermischen Ausdehnungskoeffizienten des ferritischen Bauteils und des austenitischen Bauteils liegt. Auf diese Weise wird das ferritische Material nicht direkt am austenitischen Material fixiert, vielmehr erfolgt die Fixierung mittelbar über das Verbindungsmaterial, das einerseits am ferritischen Material und andererseits am austenitischen Material fixiert ist. Da sich jedoch der thermische Ausdehnungskoeffizient des Verbindungsmaterials zwischen den thermischen Ausdehnungskoeffizienten der damit verbundenen Materialen (Austenit und Ferrit) befindet, ergibt sich dadurch ein ausgleichender Effekt, der Spannungen, die im Bereich der Verbindung auftreten, reduziert. In der Folge reduziert sich dadurch die Gefahr einer durch thermische Ausdehnungseffekte bedingten Rissbildung im Bereich der Verbindung zwischen dem Ferritbauteil und dem Austenitbauteil. Gleichzeitig reduziert sich dadurch auch die Gefahr eines Ausfalls dieser Verbindung. Die thermische Stabilität der Abgasanlage bzw. der Abgasbehandlungsvorrichtung ist dadurch erhöht.

Dabei ist das Verbindungsmaterial so gewählt, dass sich sein thermischer Ausdehnungskoeffizient etwa mittig zwischen den thermischen Ausdehnungskoeffizienten des Austenitmaterials und des Ferritmaterials befindet. Hierdurch kann die ausgleichende und spannungsreduzierende Wirkung der Verbindung optimiert werden.

Vorzugsweise handelt es sich beim Verbindungsmaterial um ein Zwei-Phasen-Material, das eine Ferritphase und eine Austenitphase aufweist. Ein derartiges Zwei-Phasen-Material kann auch als Duplexmaterial bezeichnet werden.

Dabei besteht die Verbindung aus einem weiteres Bauteil, das aus dem Verbindungsmaterial besteht und das einerseits am ferritischen Bauteil und andererseits am austenitischen Bauteil befestigt ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,

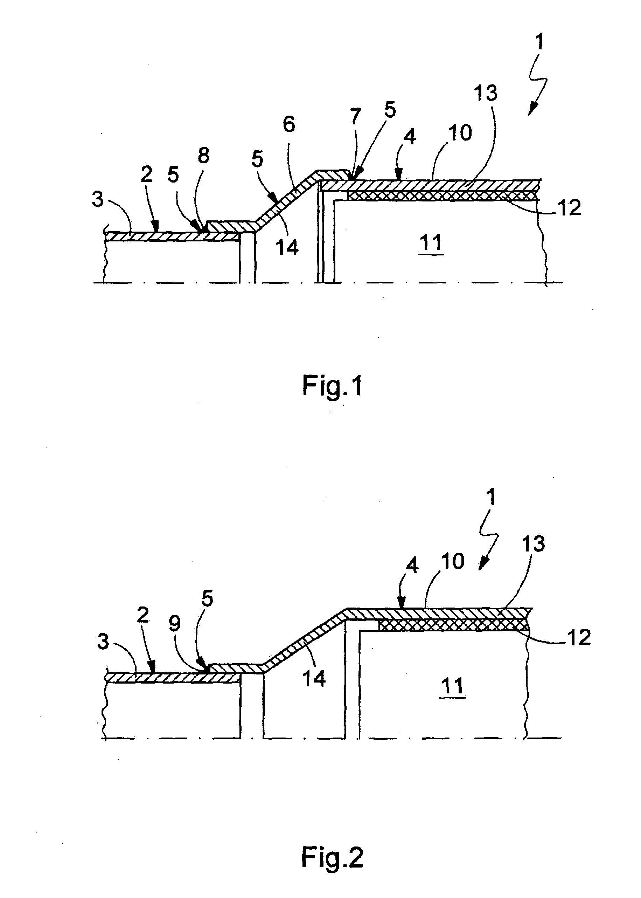

- Fig. 1 bis 4: jeweils einen stark vereinfachten, prinzipiellen Längsschnitt durch eine Abgasanlage bzw. durch eine Abgasbehandlungsvorrichtung im Bereich einer Verbindung zwischen einem austenitischen Bauteil und einem ferritischen Bauteil.

Entsprechend den Fig. 1 bis 4 umfasst eine Abgasanlage 1 nach der Erfindung einen Abgasstrang 2. Die Abgasanlage 1 dient zum Abführen von Abgasen einer Brennkraftmaschine, die insbesondere in einem Kraftfahrzeug eingebaut sein kann. Dementsprechend dient der Abgasstrang 2 zum Führen von Abgasen.

Der Abgasstrang 2 ist aus wenigstens zwei Komponenten 3, 4 zusammengebaut. Diese beiden Komponenten 3, 4 bzw. Bauteile 3, 4 sind dabei mittels einer Verbindung 5 aneinander befestigt.

Dabei besteht bei der erfindungsgemäßen Abgasanlage 1 zumindest eine dieser Komponenten, z.B. die mit 3 bezeichnete Komponente, aus einem austenitischen Material, während gleichzeitig zumindest eine andere dieser Komponenten, hier z.B. die mit 4 bezeichnete Komponente, aus einem ferritischen Material besteht. Erfindungsgemäß besteht nun die Verbindung 5, mit deren Hilfe die beiden Komponenten bzw. Bauteile 3, 4 aneinander befestigt sind, aus einem Material, dessen thermischer Ausdehnungskoeffizient zwischen den thermischen Ausdehnungskoeffizienten des Austenitmaterials der einen Komponente 3 und des Ferritmaterials der anderen Komponente 4 liegt.

Bei der in Fig. 1 gezeigten Ausführungsform umfasst besagte Verbindung 5 eine weitere Komponente 6, also ein weiteres Bauteil 6. Die weitere Komponente 6 besteht aus dem Verbindungsmaterial und ist einerseits an der ferritischen Komponente 4 und andererseits an der austenitischen Komponente 3 befestigt. Diese Befestigung erfolgt hier jeweils mittels Schweißnähten 7 bzw. 8.

Bei der Ausführungsform gemäß Fig. 2 besteht besagte Verbindung 5 selbst aus einer Schweißnaht 9, die aus dem Verbindungsmaterial besteht. Die Schweißnaht 9 verbindet dabei die austenitische Komponente 3 mit der ferritischen Komponente 4. Im Unterschied zur Variante gemäß Fig. 1 kann bei der Ausführungsform gemäß Fig. 2 die zusätzliche Komponente 6 entfallen.

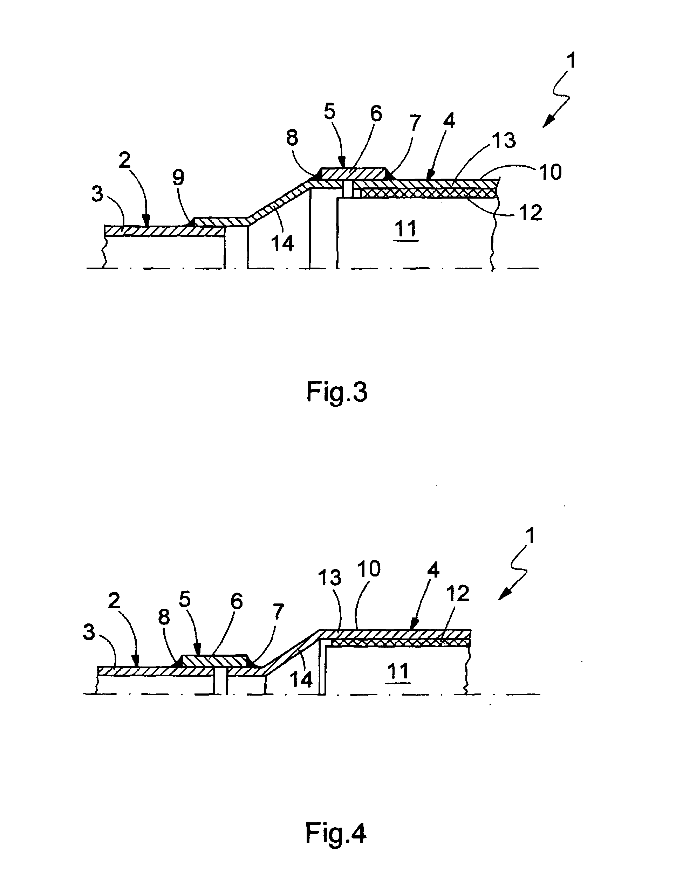

Bei den Ausführungsformen der Fig. 3 und 4 ist - wie bei der Variante gemäß Fig. 1 - die Verbindung 5 jeweils wieder mit der weiteren Komponente 6 ausgestattet, die aus dem Verbindungsmaterial besteht.

Bei den hier gezeigten, bevorzugten Ausführungsformen handelt es sich bei der einen Komponente 3 beispielsweise um ein Abgasrohr, das im folgenden ebenfalls mit 3 bezeichnet wird. Dieses Abgasrohr 3, das vorzugsweise ein Abgaskrümmer sein kann, also den Anschluss an die Brennkraftmaschine der Abgasanlage 1 bildet, ist vorzugsweise aus austenitischem Material hergestellt. Austenitische Materialien zeichnen sich durch eine besonders hohe Temperaturbeständigkeit aus. Bei der anderen Komponente 4 handelt es sich hier vorzugsweise und eine Abgasbehandlungsvorrichtung, die im folgenden ebenfalls mit 4 bezeichnet wird. Diese Abgasbehandlungsvorrichtung 4 weist ein Gehäuse 10 auf, in dem zumindest ein Abgasbehandlungseinsatz 11 angeordnet ist. Beispielsweise ist diese Abgasbehandlungseinsatz 11 im Gehäuse 10 mittels einer Lagermatte 12 gelagert. Zweckmäßig besteht dieses Gehäuse 10 zumindest in einem an die Verbindung 5 angrenzenden Bereich aus einem ferritischen Material. Ein ferritisches Material kann für die Lagerung des Abgasbehandlungseinsatzes 11 vorteilhaft sein. Bei besagtem Abgasbehandlungseinsatz 11 kann es sich vorzugsweise um ein Katalysatorelement oder um ein Partikelfilterelement oder um ein Schalldämpferelement oder um eine Kombination aus wenigstens zwei der genannten Elemente handeln.

Die bei der erfindungsgemäßen Abgasanlage 1 der Verbindung 5 zugeordnete weitere Komponente 6 ist vorzugsweise ein Ringkörper oder Hülsenkörper. Bei der Ausführungsform gemäß Fig. 1 ist die weitere Komponente 6 zusätzlich trichterförmig gestaltet.

Während bei den zuvor beschriebenen Ausführungsformen die erfindungsgemäße Verbindung 5 zum Befestigen einen austenitischen Komponente 3 an einer ferritischen Komponente 4 der Abgasanlage 1 verwendet wird, erfolgt bei den nachfolgend beschriebenen Ausführungsformen die Verwendung besagter Verbindung 5 zum Befestigen von zwei Bauteilen innerhalb der Abgasbehandlungsvorrichtung 4. Hierzu ist das Gehäuse 10 der Abgabehandlungsvorrichtung 4 aus wenigstens zwei Gehäuseteilen zusammengebaut. Beispielsweise ist in den Fig. 1 und 3 das eine Gehäuseteil ein Mantel 13, in dem der Abgasbehandlungseinsatz 11 angeordnet ist, während das andere Gehäuseteil ein Einlasstrichter oder ein Auslasstrichter bzw. allgemein ein Trichter 14 ist.

Bei der zuvor mit Bezug auf Fig. 1 beschriebenen Ausführungsform der Abgasanlage 1 bildet der Trichter 14 einen Bestandteil der Abgasanlage 1, nämlich die weitere Komponente 6 der Verbindung 5. Dementsprechend besteht der Trichter 14 dann zweckmäßig aus dem Verbindungsmaterial und ist einerseits über die Schweißverbindung 8 am austenitischen Bauteil 3 und andererseits über die Schweißverbindung 7 am ferritischen Bauteil 4 bzw. am Gehäuse 10 befestigt. Sofern jedoch der Trichter 14 als Bestandteil der Abgasbehandlungsvorrichtung 4 angesehen wird, kann es zweckmäßig sein, den Trichter 14 aus einem austenitischen Material herzustellen, um eine möglichst spannungsfreie Anbindung an das austenitische Abgasrohr 3 zu ermöglichen. Im Unterschied dazu ist der Mantel 13 vorzugsweise aus einem ferritischen Material hergestellt, was für die Lagerung des Abgasbehandlungseinsatzes 11 vorteilhaft sein kann. Bei dieser Konstellation ist es erfindungsgemäß vorgesehen, die beiden Gehäuseteile 13, 14 mit Hilfe der erfindungsgemäßen Verbindung 5 aneinander zu befestigen. Bei der Ausführungsform gemäß Fig. 1 ist diese Verbindung 5 innerhalb der Abgasbehandlungsvorrichtung 4 durch eine Schweißnaht gebildet, nämlich durch die Schweißnaht 7. Diese Schweißnaht 7 besteht dann aus dem Verbindungsmaterial, dessen thermischer Ausdehnungskoeffizient zwischen den thermischen Ausdehnungskoeffizienten des verwendeten Austenitmaterials des Trichters 14 sowie des verwendeten Ferritmaterials des Mantels 13 liegt.

Bei der Ausführungsform gemäß Fig. 3 umfasst die Verbindung 5 wieder ein zusätzliches Bauteil, hier ein zusätzliches Gehäuseteil, das ebenfalls mit 6 bezeichnet wird. Dieses weitere Gehäuseteil 6 besteht dann aus dem Verbindungsmaterial und ist einerseits am ferritischen Gehäuseteil, hier am Mantel 13, und andererseits am austenitischen Gehäuseteil, hier am Trichter 14, befestigt. Die Befestigung erfolgt dabei vorzugsweise wieder über Schweißnähte 7 bzw. 8. Der Trichter 14 kann im eingebauten Zustand auf geeignete Weise, z.B. über eine Schweißverbindung 9 am Abgasrohr 3 der Abgasanlage 1 befestigt sein.

Desweiteren ist es grundsätzlich möglich, auch die Schweißverbindungen 7, 8 mit denen der weitere Gehäuseteil 6 der Verbindung 5 an den anderen Gehäuseteilen 13, 14 befestigt ist, ebenfalls aus dem Verbindungsmaterial herzustellen. Ebenso ist es möglich, herkömmliche ferritische Schweißmaterialien einerseits für die Schweißverbindung 7 zwischen dem weiteren Bauteil 6 und dem ferritischen Gehäuse 13 bzw. eine austenitische Schweißverbindung 8 zwischen dem weiteren Gehäuseteil 6 und dem austenitischen Gehäuseteil 14 zu verwenden. Grundsätzlich ist auch eine Ausführungsform möglich, bei welcher die Schweißverbindung 7 zwischen den weiteren Gehäuseteil 6 und dem ferritischen Gehäuseteil 13 aus einem Schweißmaterial besteht, dessen thermische Ausdehnungskoeffizient zwischen den thermischen Ausdehnungskoeffizienten des Verbindungsmaterials und des Ferritmaterials liegt. Entsprechend hierzu kann auch die andere Schweißverbindung 8 zwischen dem weiteren Gehäuseteil 6 und dem austenitischen Gehäuseteil 14 aus einem Schweißmaterial bestehen, dessen thermischer Ausdehnungskoeffizient zwischen den thermischen Ausdehnungskoeffizienten des Austenitmaterials und des Verbindungsmaterials liegt.

Je nach Ausgestaltung der jeweiligen Verbindung 5 und je nach Materialwahl für die Schweißnähte 7, 8, 9 sowie für den Trichter 14 und je nach dem, ob der Trichter 14 als Gehäuseteil der Abgasbehandlungsvorrichtung 4 oder als Komponente der Abgasanlage 1 betrachtet wird, zeigen die Fig. 1 bis 4 unterschiedliche Varianten. Die Fig. 2 und 4 zeigen Ausführungsformen der Abgasanlage 1, bei denen die austenitische Komponente 3 (Abgasrohr) mit der als Abgasbehandlungsvorrichtung 4 ausgestalteten anderen Komponente 4 verbunden ist, wobei deren Gehäuse 10 zumindest in dem an die Verbindung 5 angrenzenden Bereich ferritisch ist. Dementsprechend ist in Fig. 2 die Verbindung 5 in Form der Schweißnaht 5 ausgestaltet, die aus besagtem Verbindungsmaterial besteht.

Im Unterschied dazu ist bei der Ausführungsform gemäß Fig. 4 die Verbindung 5 mit der zusätzlichen Komponente 6 ausgestattet, die einerseits mit der austenitischen Komponente 3 und andererseits mit der zumindest in dem an die Verbindung 5 angrenzenden Bereich ferritisch ausgestalteten Komponente 4 verbunden ist. Die weitere Komponente 6 besteht hier aus dem Verbindungsmaterial.

Sofern der Trichter 14 zur Abgasbehandlungsvorrichtung 4 hinzugerechnet wird, zeigen die Fig. 1 und 3 Ausführungsformen der erfindungsgemäßen Abgasbehandlungsvorrichtung 4, bei der zwei Gehäuseteile, nämlich exemplarisch der Mantel 13 und der Trichter 14 mittels der Verbindung 5 aneinander befestigt sind. Dabei zeigt Fig. 1 die als Schweißnaht 7 ausgestaltete Verbindung 5. Im Unterscheid dazu zeigt Fig. 3 eine Ausführungsform, bei der die Verbindung 5 das weitere Gehäuseteil 6 aufweist. Der Trichter 14 ist dabei austenitisch, um eine spannungsarme Anbindung an das austenitische Abgasrohr 3 zu ermöglichen.

Im Hinblick auf Fig. 1 kann der Trichter 14 auch eine Komponente der Abgasanlage 1 bilden. Dabei kann diese Komponente 14 beispielsweise ferritisch sein und über eine aus dem Verbindungsmaterial gebildete Schweißnaht 8, welche dann die Verbindung 5 bildet, an das austenitische Abgasrohr 3 angeschlossen sein. Diese Konstellation entspricht dann derjenigen, die auch in Fig. 2 gezeigt ist, mit dem Unterschied, dass bei der Variante gemäß Fig. 2 Trichter 14 und Mantel 13 einstückig ausgestaltet sind, während bei der Ausführungsform gemäß Fig. 1 der Mantel 13 und der Trichter 14 separate Bauteile bilden, die über die Schweißnaht 7 aneinander befestigt sind.

Ebenso kann - wie oben erläutert - der Trichter 14 bereits die der Verbindung 5 zugeordnete weitere Komponente 6 der Abgasanlage 1 sein, die aus dem Verbindungsmaterial besteht.

Bei den Ausführungsformen der Fig. 1 und 3 kann der Trichter 14 grundsätzlich auch eine austenitische Komponente der Abgasanlage 1 bilden, z.B. in Form eines aufgeweiteten Endabschnitts des Abgasrohrs 3. Insbesondere können der Trichter 14 und das Abgasrohr 13 abweichend von der dargestellten Variante auch aus einem Stück hergestellt sein. Die Verbindung 5 ermöglicht dann wieder eine spannungsreduzierte Befestigung dieser austenitischen Komponente 14 an der durch die Abgasbehandlungsvorrichtung 4 bzw. durch deren Gehäuse 10 gebildeten ferritischen Komponente der Abgasanlage 1. Die Befestigung erfolgt dabei wieder über die Verbindung 5, die bei der Ausführungsform gemäß Fig. 1 durch die Schweißnaht 7 aus dem Verbindungsmaterial gebildet ist und die bei der Ausführungsform gemäß Fig. 3 die zusätzliche Komponente 6 aus dem Verbindungsmaterial aufweist.

Als Ferritmaterial für die ferritische Komponente der Abgasanlage 1, z.B. die Abgasbehandlungsvorrichtung 4 bzw. deren Gehäuse 10, bzw. für das ferritische Gehäuseteil der Abgasbehandlungsvorrichtung 4, beispielsweise der Mantel 13, eignet sich insbesondere ein ferritischer Stahl, z.B. ein Stahl der Sorte 1.4509 oder 1.4510 oder 1.4512 oder 1.4513. Im vorliegenden Zusammenhang beziehen sich die Werkstoffnummern auf die Europäische Norm EN 10027-2: 1992.

Als Austenitmaterial für die austenitische Komponente der Abgasanlage 1, z.B. das Abgasrohr 3, bzw. für das austenitische Gehäuseteil der Abgasbehandlungsvorrichtung 4, z.B. der Trichter 14, eignet sich insbesondere ein austenitischer Stahl, z.B. ein Stahl der Sorte 1.4828 oder 1.4541 oder 1.4835 oder 1.4818 oder 1.4301 oder 1.4841.

Das Verbindungsmaterial ist hinsichtlich seines thermischen Ausdehnungskoeffizienten zweckmäßig so gewählt, dass dieser etwa mittig zwischen den thermischen Ausdehnungskoeffizienten des Ferritmaterials und des Austenitmaterials liegt. In besondere Weise eignet sich für das Verbindungsmaterial ein Zwei-Phasen-Material, das auch als Duplexmaterial bezeichnet werden kann und das sowohl eine Ferritphase als auch eine Austenitphase aufweist. Bevorzugt handelt es sich beim Verbindungsmaterial um einen Zwei-Phasen-Stahl, beispielsweise ein Stahl der Sorte 1.4462 oder 1.4362 oder 1.4162 oder 1.4821 oder 1.4501. Beispielsweise ist bei der erfindungsgemäßen Abgasbehandlungsvorrichtung 4 das der Verbindung zugeordnete weitere Gehäuseteil 6 aus diesem Verbindungsmaterial hergestellt. Ebenso kann bei der erfindungsgemäßen Abgasanlage 1 die der Verbindung 5 zugeordnete weitere Komponente 6 aus diesem Verbindungsmaterial bestehen.

Sofern die Verbindung 5 als Schweißnaht 7, 8, 9 ausgestaltet ist oder eine solche Schweißnaht 7, 8, 9 umfasst, besteht sie aus dem Verbindungsmaterial. Die erfindungsgemäße Schweißnaht 7, 8, 9 besteht vorzugsweise aus solchem Verbindungsmaterial, das ein Zwei-Phasen-Gefüge mit einer Austenitphase und einer Ferritphase besitzt. Zum Herstellen einer derartigen Schweißnaht 7, 8, 9 kann als Schweißmaterial oder als Schweißzusatzstoff beispielsweise das gewünschte Zwei-Phasen-Material verwendet werden, beispielweise besagtes Duplexmaterial der Sorten 1.4462, 1.4362, 1.4820 oder Avesta 2101.

Alternativ ist es grundsätzlich auch möglich, das Schweißmaterial bzw. das Schweißzusatzmaterial so auszuwählen, dass sich erst durch den Schweißvorgang z.B. das jeweils gewünschte Zwei-Phasen-Material oder Duplexmaterial ausbildet. Beispielsweise kann zum Herstellen der Schweißnaht 7, 8, 9 auf einem austenitischen Grundmaterial ein ferritisches Schweißmaterial verwendet werden, z.B. der Sorte 1.4510 oder 1.4511, das unter Einhaltung bestimmter Schweißparameter während des Schweißvorgangs bzw. beim Aushärten der Schweißnaht 7, 8, 9 das gewünschte Zwei-Phasen-System mit Ferritphase und Austenitphase ausbildet.

Bezugnehmend auf die Fig. 1 und 2 wird im folgenden eine weitere, alternative Ausführungsform der Erfindung näher erläutert. Bei dieser alternativen Lösung kann das Gehäuse 10 zumindest in einem Bereich, in dem der wenigstens eine Abgasbehandlungseinsatz 11 angeordnet ist, aus besagtem Verbindungsmaterial bestehen. Beispielsweise ist somit bei der Ausführungsform gemäß Fig. 1 zumindest der Mantel 13 des Gehäuses 10 aus dem Verbindungsmaterial hergestellt. Bei der Ausführungsform gemäß Fig. 2, bei welcher der Mantel 13 zumindest einen Trichter 14 als integralen Bestandteil umfasst, sind sowohl der Mantel 13 als auch der wenigstens eine Trichter 14 aus dem Verbindungsmaterial hergestellt. Wie zuvor erläutert, ist dieses Verbindungsmaterial ein Material, dessen thermischer Ausdehnungskoeffizient zwischen denjenigen von Austenit und Ferrit liegt, und zwar vorzugsweise mittig. Zweckmäßig wird für besagten Bereich des Gehäuses 10, also zumindest für den Mantel 13, ein Zwei-Phasen-Material, also ein Duplexmaterial verwendet, das sowohl eine Austenitphase als auch eine Ferritphase aufweist. Vorzugsweise handelt es sich bei dem für den Mantel 13 des Gehäuses 10 verwendeten Werkstoff um einen Zwei-Phasen-Stahl, insbesondere der Sorte 1.4462 oder 1.4362 oder 1.4162 oder 1.4821 oder 1.4501.

## Patentansprüche

1. Abgasbehandlungsvorrichtung für eine Abgasanlage (1) einer Brennkraftmaschine, insbesondere in einem Kraftfahrzeug,
- mit einem Gehäuse (10), in dem wenigstens ein Abgasbehandlungseinsatz (11) angeordnet ist,
- wobei das Gehäuse (10) aus wenigstens zwei Gehäuseteilen (13, 14) zusammengebaut ist, von denen zumindest eines aus einem ferritischen Material und zumindest ein anderes aus einem austenitischen Material besteht,
- wobei das wenigstens eine ferritische Gehäuseteil (13) an dem wenigstens einen austenitischen Gehäuseteil (14) mittels eines weiteren Gehäuseteils (6) befestigt ist ,
**dadurch gekennzeichnet,**
**dass** dieses weitere Gehäuseteil (6) aus einem Material besteht, dessen thermischer Ausdehnungskoeffizient zwischen den thermischen Ausdehnungskoeffizienten des Ferritmaterials und des Austenitmaterials liegt.

2. Abgasbehandlungsvorrichtung nach Anspruch 1 ,
**dadurch gekennzeichnet,**
**dass** das weitere Gehäuseteil (6) ein Ringkörper oder ein Hülsenkörper ist.

3. Abgasbehandlungsvorrichtung nach einem der Ansprüche 1 bis 2,
**dadurch gekennzeichnet,**
**dass** das Material des weiteren Gehäuseteils (6) so gewählt ist, dass sein thermischer Ausdehnungskoeffizient etwa mittig zwischen den thermischen Ausdehnungskoeffizienten des Ferritmaterials und des Austenitmaterials liegt.

4. Abgasbehandlungsvorrichtung nach einem der Ansprüche 1 bis 3,
**dadurch gekennzeichnet,**
**dass** das Material des weiteren Gehäuseteils (6) ein Zwei-Phasen-Material mit einer Ferritphase und einer Austenitphase ist.

5. Abgasanlage für eine Brennkraftmaschine, insbesondere in einem Kraftfahrzeug,
- mit einem Abgas führenden Abgasstrang (2), der aus wenigstens zwei Komponenten (3, 4) zusammengebaut ist,
- wobei zwei dieser Komponenten (3, 4) mittels eines weiteren Gehäuseteils (6) aneinander befestigt sind,
- wobei die eine Komponente (4) zumindest in einem an diesem weiteren Gehäuseteil (6) angrenzenden Bereich aus einem ferritischen Material besteht, während die andere Komponente (3) zumindest in einem an diesem weiteren Gehäuseteil (6) angrenzenden Bereich aus einem austenitischen Material besteht,
- wobei dieses weitere Gehäuseteil (6) aus einem Material besteht, dessen thermischer Ausdehnungskoeffizient zwischen den thermischen Ausdehnungskoeffizienten des Ferritmaterials und des Austenitmaterials liegt.

6. Verwendung eines Materials in einem weiteren Gehäuseteil (6) innerhalb einer Abgasanlage (1) einer Brennkraftmaschine, insbesondere in einem Kraftfahrzeug, oder innerhalb einer Abgasbehandlungsvorrichtung (4) für eine solche Abgasanlage (1) zum Befestigen eines ersten Bauteils (4; 13) aus einem ferritischen Material an einem zweiten Bauteil (3; 14) aus einem austenitischen Material, wobei das Material einen thermischen Ausdehnungskoeffizienten aufweist, der zwischen den thermischen Ausdehnungskoeffizienten des Ferritmaterials (4; 13) und des Austenitmaterials ( 3; 14) liegt.

## Claims

1. An exhaust gas treatment device for an exhaust system (1) of an internal combustion engine, more preferably in a motor vehicle,
- with a housing (10), in which at least one exhaust gas treatment insert (11) is arranged,
- wherein the housing (10) is assembled of at least two housing parts (13, 14), of which at least one consists of a ferritic material and at least one other one of an austenitic material,
- wherein the at least one ferritic housing part (13) is fastened to the at least one austenitic housing part (14) by means of a further housing part (6),
**characterized in that** this further housing part (6) consists of a material whose thermal expansion coefficient is between the thermal expansion coefficients of the ferrite material and the austenite material.

2. The exhaust gas treatment device according to Claim 1, **characterized in that** the further housing part (6) is a ring body or a sleeve body.

3. The exhaust gas treatment device according to any one of the Claims 1 to 2, **characterized in that** the material of the further housing part (6) is so selected that its thermal expansion coefficient is approximately in the middle between the thermal expansion coefficients of the ferrite material and of the austenite material.

4. The exhaust gas treatment device according to any one of the Claims 1 to 3, **characterized in that** the material of the further housing part (6) is a two-phase material with a ferrite phase and an austenite phase.

5. An exhaust system for an internal combustion engine, more preferably in a motor vehicle,
- with an exhaust gas train (2) carrying exhaust gas which is assembled of at least two components (3, 4),
- wherein two of these components (3, 4) are fastened to one another by means of a further housing part (6),
- wherein the one component (4) in a region adjoining this further housing part (6) consists of a ferritic material, while another component (3) at least in a region adjoining this further housing part (6) consists of an austenitic material,
- wherein this further housing part (6) consists of a material whose thermal expansion coefficient is between the thermal expansion coefficients of the ferrite material and of the austenite material.

6. The use of a material in a further housing part (6) within an exhaust system (1) of an internal combustion engine, more preferably in a motor vehicle or within an exhaust gas treatment device (4) for such an exhaust system (1) for fastening a first component (4; 13) of a ferritic material to a second component (3; 14) of an austenitic material, wherein the material has a thermal expansion coefficient which is between the thermal expansion coefficients of the ferrite material (4; 13) and the austenite material (3; 14).

## Revendications

1. Dispositif de traitement de gaz d'échappement pour une installation d'échappement (1) d'un moteur à combustion interne, en particulier sur un véhicule,
- avec un boîtier (10), dans lequel est disposé au moins un insert de traitement de gaz d'échappement (11),
- le boîtier (10) étant assemblé à partir d'au moins deux parties de boîtier (13, 14), dont au moins l'une est à base d'un matériau ferritique et au moins une autre à base d'un matériau austénitique,
- la au moins une partie de boîtier (13) ferritique étant fixée sur la au moins une partie de boîtier (14) austénitique au moyen d'une autre partie de boîtier (6),
**caractérisé en ce que**
cette autre partie de boîtier (6) est à base d'un matériau dont le coefficient de dilatation thermique se situe entre le coefficient de dilatation thermique du matériau ferritique et du matériau austénitique.

2. Dispositif de traitement de gaz d'échappement selon la revendication 1,
**caractérisé en ce que**
l'autre partie de boîtier (6) est un corps en forme d'anneau ou un corps en forme de douille.

3. Dispositif de traitement de gaz d'échappement selon l'une quelconque des revendications 1 à 2,
**caractérisé en ce que**
le matériau de l'autre partie de boîtier (6) est choisi de telle sorte que son coefficient de dilatation thermique se situe à peu près au milieu entre les coefficients de dilatation thermique du matériau ferritique et du matériau austénitique.

4. Dispositif de traitement de gaz d'échappement selon l'une quelconque des revendications 1 à 3,
**caractérisé en ce que**
le matériau de l'autre partie de boîtier (6) est un matériau à deux phases avec une phase ferritique et une phase austénitique.

5. Installation de gaz d'échappement pour un moteur à combustion interne, en particulier dans un véhicule,
- avec une branche d'échappement (2) véhiculant des gaz d'échappement, qui est montée à partir d'au moins deux composants (3, 4),
- deux de ces composants (3, 4) étant fixés l'un à l'autre au moyen d'une autre partie de boîtier (6),
- l'un des composants (4) au moins dans une zone contiguë à cette autre partie de boîtier (6) étant à base d'un matériau ferritique, alors que l'autre composant (3) au moins dans une zone contiguë à cette autre partie de boîtier (6) est à base d'un matériau austénitique,
- cette autre partie de boîtier (6) étant à base d'un matériau dont le coefficient de dilatation thermique se situe entre les coefficients de dilatation thermique du matériau ferritique et du matériau austénitique.

6. Utilisation d'un matériau dans une autre partie de boîtier (6) à l'intérieur d'une installation d'échappement (1) d'un moteur à combustion interne, en particulier sur un véhicule, ou à l'intérieur d'un dispositif de traitement de gaz d'échappement (4) pour une telle installation d'échappement (1) pour la fixation d'un premier composant (4 ; 13) à base d'un matériau ferritique sur un second composant (3 ; 14) à base d'un matériau austénitique, le matériau présentant un coefficient de dilatation thermique qui se situe entre les coefficients de dilatation thermique du matériau ferritique (4 ; 13) et du matériau austénitique (3 ; 14).
